# EUROPÄISCHE PATENTSCHRIFT

(11) **EP 1 138 160 B1**
(45) Veröffentlichungstag und Bekanntmachung des Hinweises auf die Patenterteilung: **26.03.2003**
(21) Anmeldenummer: 99963427.2
(22) Anmeldetag: 08.12.1999
(51) Int. Cl.: H04N 7/20, H04N 7/10

(54) **SATELLITENFERNSEHSIGNAL-EMPFANGSANLAGE**
RECEIVING STATION FOR SATELLITE TELEVISION SIGNALS
INSTALLATION DE RECEPTION DE SIGNAUX DE TELEVISION PAR SATELLITE

(30) Priorität: 11.12.1998 DE 19857241
(43) Veröffentlichungstag der Anmeldung: 04.10.2001
(73) Patentinhaber: GRUNDIG Aktiengesellschaft, 90471 Nürnberg (DE)
(72) Erfinder: GRAEF, Guido, D-90762 Fuerth (DE)
(86) Internationale Anmeldenummer: EP9909636
(87) Internationale Veröffentlichungsnummer: WO00036840

(56) Entgegenhaltungen:
- EP-A- 0 288 928
- EP-A- 0 582 023
- DE-A- 3 831 994

## Beschreibung

Die Erfindung betrifft eine Satellitenfernsehsignal-Empfangsanlage.

Aus dem vom Hüthig Buch Verlag Heidelberg aufgelegten Buch "12-GHz-Satellitenempfang" von Bernhard Liesenkötter, 5. Auflage, 1994, sind bereits Satellitenfernsehsignal-Empfangsanlagen bekannt. Im Abschnitt 4.5.2 dieses Buches auf Seite 104-106 ist eine Gemeinschaftsempfangsanlage beschrieben, die mit einer zentralen Modulationswandlung arbeitet. Dabei werden zentral in der Empfangsstelle, die beispielsweise auf dem Dachboden eines Wohnblockes oder eines Mehrfamilienhauses vorgesehen sein kann, die von der Außeneinheit der Satellitenempfangsanlage abgeleiteten Fernsehsignale zunächst demoduliert und dann im Sinne einer Remodulation in Norm-TV-Kanäle umgesetzt, d. h. in VHF- oder UHF-Signale. Diese können dann über ein Hausantennenkabel einem Fernsehempfangsgerät zugeführt und auf dessen Bildschirm wiedergegeben werden.

Aus EP 0 582 023 A1 ist eine Femsehanlage mit einem oder mehreren Empfängern bzw. Teilnehmern bekannt. Die Femsehanlage und die Empfänger bzw. Teilnehmer sind mit einem Kabel, mit einer Antenne und/oder einem Kabelnetz und/oder einer Satellitenempfangsanlage verbunden. Diese Anlage stellt Satellitenfernsehprogramme bereit und setzt diese in das Kabel um. Die Satellitenempfangsanlage ist für den oder die Empfänger bzw. Teilnehmer über das Kabel femsteuerbar.

Aus DE 38 31 994 A1 ist eine Antennenanlage zum Empfang von Signalen eines terrestrischen sowie eines orbitalen Senders, mit einem in Antennennähe angeordneten Satellitentuner bekannt. Im Weiteren ist ein Transcoder zur Umsetzung des Satellitensignals in ein Standardsignal und dessen Einspeisung in die Antennenableitung offenbart. Die Abstimmung des Satellitentuners, die Arbeitsweise des Transcoders und die Abstimmung des Modulators sind femsteuerbar.

Aus EP 0 288 928 A2 ist eine Anordnung zum direkten Empfang von Satellitenprogrammen offenbart. Diese Anordnung weist eine externe Empfangsstation, an welche eine Parapol-Antenne und ein Konverter angeschlossen sind, auf. Im Weiteren ist eine interne Einheit vorgesehen, welche die Funktionen des Verstärkers und des Signalumsetzers realisiert. Um die Satellitensignale für ein normales TV-Gerät empfangbar zu machen, ist der Verstärker sowie der Konverter vorgesehen. Die Vorrichtung weist eine Mehrzahl von Konvertem auf, welche jeweils das konvertierte Signal in Frequenzbänder im OHF- bzw. VHF-Band umsetzt.

Der Erfindung liegt die Aufgabe zugrunde, einen Weg aufzuzeigen, wie mittels eines Fernsehempfangsgerätes, beispielsweise eines Fernsehempfängers oder eines Videorecorders, in benutzerfreundlicher Weise Satellitenfemsehsignale wiedergegeben werden können.

Diese Aufgabe wird durch eine Satellitenfernsehsignal-Empfangsanlage mit den im Anspruch 1 angegebenen Merkmalen gelöst. Vorteilhafte Ausgestaltungen und Weiterbildungen ergeben sich aus den abhängigen Ansprüchen.

Die Vorteile einer Satellitenfemsehsignal-Empfangsanlage gemäß der Erfindung bestehen insbesondere darin, daß der Benutzer mittels ein und derselben Fernbedienung sowohl terrestrisch empfangene als auch über Satellit übertragene Fernsehsendungen anwählen kann, ohne daß er wissen muß, von welcher dieser Quellen das jeweilige Signal stammt und ohne daß er Umschalttasten betätigen muß.

Die Vorteile einer Satellitenfernsehsignal-Empfangsanlage mit den im Anspruch 4 angegebenen Merkmalen bestehen darin, daß sie mit herkömmlichen Fernsehempfangsgeräten realisiert werden kann. Voraussetzung ist lediglich, daß diese eine Euro-AV-Buchse aufweisen. Dies ist bei den meisten am Markt befindlichen Geräten der Fall.

Mittels der in den Ansprüchen 12 oder 13 angegebenen Merkmale wird eine Verringerung der Anzahl der Komponenten der Satellitenfernsehsignal-Empfangsanlage erreicht.

Durch die im Anspruch 14 angegebenen Speicher wird erreicht, daß die vom Satellitenempfänger erzeugten Signale nahezu verzögerungsfrei vorliegen, so daß bei einer Umschaltung auf ein neues Femsehprogramm keine Wartezeiten auftreten.

Weitere vorteilhafte Eigenschaften der Erfindung ergeben sich aus der Erläuterung eines Ausführungsbeispiels anhand der Figuren.

Es zeigt:
- Figur 1 ein erstes Ausführungsbeispiel für die Erfindung und
- Figur 2 ein zweites Ausführungsbeispiel für die Erfindung.

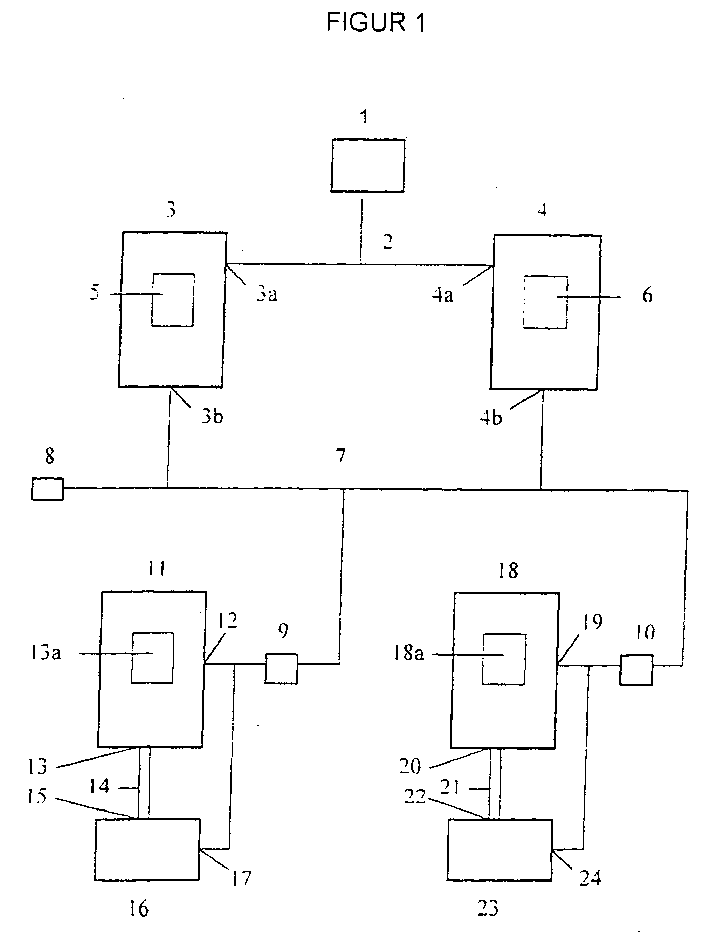

In der Figur 1, die ein erstes Ausführungsbeispiel für die Erfindung zeigt, ist ein Blockschaltbild einer Satellitenfernsehsignal-Empfangsanlage dargestellt. Diese weist eine Außeneinheit 1, ein Satellitenantennenkabel 2, einen ersten Satellitenempfänger 3, einen zweiten Satellitenempfänger 4, ein Hausantennenkabel 7, eine Hausantenne 8, Antennensteckdosen 9 und 10, einen ersten Fernsehempfänger 11, ein erstes Satellitenempfänger-Steuermodul 16, einen zweiten Fernsehempfänger 18 und ein zweites Satellitenempfänger-Steuermodul 23 auf, wobei das Hausantennenkabel 7 zur Verbindung der genannten Baugruppen vorgesehen ist.

Der erste Satellitenempfänger 3 weist einen Eingangsanschluß 3a auf, über welchen ihm von der Außeneinheit 1 empfangene und aufbereitete Fernsehsignale zugeführt werden. Diese werden im Satellitenempfänger 3 demoduliert und mittels eines Remodulators 5 derart remoduliert, daß sie in einem Norm-TV-Kanal, der im UHF- oder VHF-Bereich liegt, zum Liegen kommen. Die remodulierten Signale werden am Ausgang 3b des Satellitenempfängers 3 zur Verfügung gestellt.

Der zweite Satellitenempfänger 4 weist einen Eingangsanschluß 4a auf, über welchen ihm von der Außeneinheit 1 empfangene und aufbereitete Femsehsignale zugeführt werden. Diese werden im Satellitenempfänger demoduliert und mittels eines Remodulators 6 derart remoduliert, daß sie in einem Norm-TV-Kanal, der im UHF- oder VHF-Bereich liegt, zum Liegen kommen. Die remodulierten Signale werden am Ausgang 4b des Satellitenempfängers 4 zur Verfügung gestellt.

Die genannten Baugruppen 3, 4, 5 und 6 sind Bestandteil einer zentralen Satellitenkopfstation, die auf dem Dachboden eines Wohnblockes ortsgetrennt von den genannten Fernsehgeräten 11 und 18 angeordnet ist.

Die beiden Satellitenempfänger 3 und 4 sind über das Hausantennenkabel 7 mit den Antennensteckdosen 9 und 10 verbunden. Von der Antennensteckdose 9 aus ist das Hausantennenkabel 7 weitergeführt an den ersten Femsehempfänger 11 und das erste Satellitenempfänger-Steuermodul 16. Von der Antennensteckdose 10 aus ist das Hausantennenkabel an den zweiten Fernsehempfänger 18 und das zweite Satellitenempfänger-Steuermodul 23 weitergeführt.

Der erste Fernsehempfänger 11 ist ein mikroprozessorgesteuertes Fernsehgerät, welches über einen Antennenanschluß 12 an das Hausantennenkabel 7 angeschlossen ist. Der erste Fernsehempfänger 11 weist weiterhin eine Videosignalausgangsbuchse 13, insbesondere eine Euro-AV-Buchse, auf. Diese ist über ein Kabel 14, insbesondere ein Euro-AV-Kabel, mit einer Videosignaleingangsbuchse 15, insbesondere einer Euro-AV-Buchse, des ersten Satellitenempfänger-Steuermoduls16 verbunden.
In der weiteren Beschreibung der Erfindung wird die Videosignaleingangsbuchse 15 und die Videosignalausgangsbuchse 13 als Euro-AV-Buchse bezeichnet.

Der zweite Fernsehempfänger 18, welcher in einem anderen Zimmer oder einer anderen Wohnung des Wohnblockes aufgestellt ist, ist ebenfalls ein mikroprozessorgesteuertes Fernsehgerät, welches über einen Antennenanschluß 19 an das Hausantennenkabel 7 angeschlossen ist. Der zweite Fernsehempfänger 18 weist weiterhin eine Euro-AV-Buchse 20 auf und ist über ein Euro-AV-Kabel 21 mit einer Euro-AV-Buchse 22 des zweiten Satellitenempfänger-Steuermoduls 23 verbunden.

Die beiden Fernsehempfänger 11 und 18 sind herkömmliche Fernsehempfänger, die heute am Markt erhältlich sind. Sie weisen jeweils einen nichtflüchtigen Senderspeicher 13a bzw. 18a, an dessen Speicherplätzen vom Benutzer am Empfangsort Daten abgespeichert werden, die Abstimmfrequenzen oder zugehörigen Teilungsverhältnissen für eine Vielzahl von Wunschsendern entsprechen, wobei diese Wunschsender beispielsweise ARD, ZDF, BR3, SAT1, RTL, usw., sind. Diesen Speicherplätzen sind jeweils Stationstastennummern zugeordnet, so daß der Benutzer durch Betätigung einer entsprechenden Zifferntaste oder Ziffemtastenkombination der Fembedienung des Fernsehempfängers einen gewünschten Sender anwählen bzw. den Femsehempfänger auf einen gewünschten Femsehkanal umschalten kann.

Der jeweils zugehörige Satellitenempfänger 3 oder 4 weist ebenfalls einen Mikrocomputer auf, der zur Gerätesteuerung vorgesehen ist, unter anderem dazu, als Reaktion auf ein zugeführtes Steuersignal einen Sendersuchlauf im Satellitenempfänger zu starten und auch wieder zu stoppen.

Da die beiden Empfängergruppen 3, 11, 16 bzw. 4, 18, 23 funktionsgleich parallel zueinander angeordnet sind, wird im folgenden die Funktionsweise der Empfangsanlage lediglich anhand der Empfängergruppe 3, 11, 16 erläutert.

Als Ausgangssituation wird angenommen, daß der Femsehempfänger 11 bereits einen programmierten Senderspeicher 13a aufweist, an dessen Speicherplätzen Frequenzdaten, Kanaldaten oder zugehörige Teilungsverhältnisse abgespeichert sind, die jeweils Wunschsendern entsprechen. Diese Wunschsender können dann durch eine Betätigung einer Zifferntaste oder Ziffemtastenkombination der Bedientastatur aufgerufen werden.

Handelt es sich bei dem mittels einer Zifferntaste angewählten Fernsehprogramm um ein Satellitenprogramm, welches mittels der Außeneinheit 1 der Satellitenfemsehsignal-Empfangsanlage empfangen wird, dann geschieht dieser Empfang wie folgt:
Nach besagter Betätigung der Ziffemtaste der Fembedienung wird unter Steuerung durch den Mikrocomputer des Fernsehempfängers 11 der Tuner des Fernsehgerätes auf den zugehörigen Kanal abgestimmt, wobei die zu dieser Abstimmung notwendigen Daten aus dem Senderspeicher 13a geholt werden.

Da unmittelbar nach der Abstimmung des Tuners auf den genannten Kanal noch keine Bildsignale aus diesem Kanal vorliegen, liegen auch an der Euro-AV-Buchse 13 des Fernsehempfängers 11 keine Bildsignale vor.

Im Satellitenempfänger-Steuermodul 16, welchem das an der Euro-AV-Buchse 13 des Fernsehempfängers 11 anliegende Signal über das Euro-AV-Kabel 14 und die Euro-AV-Buchse 15 zugeführt wird, ist ein Bildsignaldetektor vorgesehen, welcher erkennt, ob an der Euro-AV-Buchse des Fem-sehempfängers Bildsignale vorliegen oder nicht. Zu diesem Zweck kann eine Auswertung von Bildinhaltssignalen oder von Synchronsignalen erfolgen. Es kann aber auch eine Auswertung einer digitalen Kennung aus dem Bildsignal erfolgen.

Erkennt der Detektor, daß keine Bildsignale vorliegen, dann wird im Satellitenempfänger-Steuermodul 16 ein Steuersignal erzeugt, welches dem Satellitenempfänger 3 über den Anschluß 17 des Satellitenempfänger-Steuermoduls und das Hausantennenkabel 7 zugeführt wird. Dieses bewirkt im Satellitenempfänger 3 den Start eines Suchlaufvorganges, in dessen Rahmen der Satellitenempfänger nacheinander Satellitenkanäle nach empfangbaren Sendem absucht.

Wird bei diesem Suchlauf in einem Satellitenkanal ein empfangbarer Sender ermittelt, dann werden die zugehörigen Signale im Satellitenempfänger 3 demoduliert und danach im Remodulator 5 in ein Norm-TV-Signal umgesetzt, welches im VHF- oder UHF-Bereich angesiedelt ist.

In welchen Kanal des VHF- oder UHF-Bereiches das demodulierte Signal umgesetzt wird, ist durch den Senderspeicher des Satellitenempfängers 3 vorgegeben. An den Speicherplätzen dieses Senderspeichers ist jeweils zu einer Satellitenkanalinformation eine zugehörige Information über einen terrestrischen Fernsehkanal abgespeichert, beispielsweise eine Frequenzangabe, eine Kanalangabe oder ein zugehöriges Teilungsverhältnis. Diese Information über einen terrestrischen Femsehkanal stimmt bezüglich ihres Speicherplatzes und Inhalts mit der entsprechenden Information des Senderspeichers des Femsehempfängers 11 überein.

Diese Information wird vom Modulator des Satellitenempfängers zur Remodulation des Fernsehsignals verwendet, so daß das in einem Sateliitenkanal empfangene Fernsehsignal im Satellitenempfänger in einen bestimmten jeweils zugehörigen terrestrischen Femsehkanal, der im VHFoder UHF-Bereich liegt, umgesetzt wird. Dieses Signal wird dann über das Hausantennenkabel 7, die Antennendose 9 und den Anschluß 12 dem Tuner des Fernsehempfängers 11 zugeführt. Da dieser durch die oben genannte Betätigung der zugehörigen Ziffemtaste ebenfalls auf diesen terrestrischen Empfangskanal abgestimmt ist, liegen am Tunerausgang und auch an der Euro-AV-Buchse 13 des Fernsehempfängers 11 Bildsignale vor. Dies wird vom Detektor des Satellitenempfänger-Steuermoduls 16 erkannt. Als Folge davon wird im Satellitenempfänger-Steuermodul ein weiteres Steuersignal erzeugt und dem Satellitenempfänger 3 über die Anschlußbuchse 17 und das Hausantennenkabel 7 zugeführt.

Dieses weitere Steuersignal bewirkt im Satellitenempfänger 3 einen Suchlaufstop, da mittels des Satellitenempfängers nunmehr die gewünschten Signale empfangen werden.

Wird im Satellitenempfänger hingegen im Rahmen des Suchlaufes ein anderes Fernsehsignal ermittelt, welches durch die Remodulation in einen (anderen) terrestrischen Empfangskanal umgesetzt wird, auf welchen der Tuner des Fernsehempfängers 11 nicht abgestimmt ist, dann liegt an der Euro-AV-Buchse 13 des Fernsehempfängers kein Bildsignal vor und der Suchlauf im Satellitenempfänger 3 wird fortgesetzt.

Erfolgt nach einer Bildschirmwiedergabe eines vom Satellitenempfänger 3 abgeleiteten Fernsehsignals eine Umschaltung des Fernsehempfängers 11 auf einen anderen Kanal, dann liegen an der Euro-AV-Buchse 13 erneut keine Bildsignale vor. Daraufhin erzeugt das Satellitenempfänger-Steuermodul 16 wiederum ein Suchlaufstartsignal für den Satellitenempfänger 3. In diesem erfolgt nach Empfang des Suchlaufstartsignals ein Suchlauf nach empfangbaren Signalen. Die empfangenen Signale werden im Satellitenempfänger demoduliert und dann wieder in einen jeweils zugehörigen terrestrischen Fernsehkanal remoduliert. Dies geschieht so lange, bis am Ausgang des Tuners des Fernsehempfängers 11 wieder Bildsignale vorliegen. Dies wiederum wird vom Detektor im Satellitenempfänger-Steuermodul 16 erkannt, so daß das Satellitenempfänger-Steuermodul 16 ein Suchlaufstopsignal über das Hausantennenkabel 7 an den Satellitenempfänger 3 aussendet.

Bei dieser Vorgehensweise kann es nach der Anwahl eines Fernsehsenders mittels der Bedientastatur des Fernsehempfängers 11 zu Wartezeiten kommen, da im Satellitenempfänger 3 im Rahmen eines Suchlaufs erst der gewünschte Sender ermittelt werden muß. Diese Wartezeiten können dadurch verkürzt werden, daß mittels der gezeigten Anlage nur eine begrenzte Anzahl von Satellitensendern empfangen werden soll. Dies kann beispielsweise dadurch erreicht werden, daß nur deutschsprachige ASTRA-Sender empfangen werden. Durch diese Beschränkung wird gleichzeitig erreicht, daß die Anzahl der zur Verfügung stehenden terrestrischen Kanäle, in welche die Signale bei der Remodulation im Satellitenempfänger umgesetzt werden, nicht überschritten wird.

Die genannten Wartezeiten können auch dadurch reduziert werden, daß im Satellitenempfänger ein intelligenter Suchlauf erfolgt. Bei diesem macht man davon Gebrauch, daß die Programm- bzw. Kanaltabellen im Satellitenempfänger und im Fernsehempfänger aneinander angepaßt sind. Ist das der Fall, dann können nach einer Programmumschaltung des Fernsehempfängers mittels dessen Bedientastatur im Satellitenempfänger zunächst diejenigen Satellitenkanäle eingestellt werden, die VHF- oder UHF-Kanälen entsprechen, welche bei der Programmanwahl durch eine Betätigung einer "+" - oder "-" -Taste der Bedientastatur eingestellt werden können. Erst wenn diese Suche vergeblich bleibt, erfolgt ein Suchlauf im gesamten Empfangsbereich.

Bei diesem intelligenten Suchlauf kann man auch davon Gebrauch machen, daß im Satellitenempfänger eine Statistik abgespeichert wird, aus welcher hervorgeht, welche Programme am häufigsten gesehen werden. Diese werden dann nach einer Programmanwahl bei der Suche als erste eingestellt. Erst wenn diese Suche vergeblich bleibt, erfolgt ein Suchlauf im gesamten Empfangsbereich.

Ein wesentlicher Vorteil des in der Figur 1 dargestellten Ausführungsbeispiels besteht darin, daß auf die beschriebene Weise herkömmliche Fernsehempfänger zum Empfang von Satellitenfernsehsignalen verwendet werden können. Voraussetzung ist lediglich, daß diese Fernsehempfänger mit einer Euro-AV-Buchse versehen sind, über welche dem an den Fernsehempfänger angeschlossenen Satellitenempfänger-Steuermodul Informationen darüber zugeführt werden, ob nach einer Ein- oder Umschaltung des Fernsehempfängers auf ein gewünschtes Programm ein empfangenes Bildsignal vorliegt oder nicht.

Die Anwahl eines Femsehprogrammes erfolgt unabhängig davon, ob es sich um ein von der terrestrischen Empfangsantenne 8 oder der Außeneinheit 1 abgeleitetes Fernsehsignal handelt, stets mittels der Bedieneinheit des Fernsehempfängers. Der Benutzer braucht folglich keinerlei Kenntnis darüber zu besitzen, von welcher dieser Antennen das Signal stammt und braucht auch keine Umschaltung von der terrestrischen Ebene in die Satellitenebene vorzunehmen.

In vorteilhafter Weise kann an einer geeigneten Position der gezeigten Empfangsanlage ein Umschalter vorgesehen sein, der nach einer mittels der Bedieneinheit durchgeführten Anwahl eines Fernsehsenders automatisch den Signalweg von der momentan nicht benötigten Antenne zum Fernsehempfänger unterbricht.

Damit das Satellitenempfänger-Steuermodul bei der Detektion des Femsehsignals nicht von internen Onscreen-Display-Generatoren des Fernsehgerätes gestört wird, kann in vorteilhafter Weise in das im Satellitenempfänger erzeugte UHF- bzw. VHF-Signal ein digitales Kennsignal eingefügt werden, beispielsweise in die Austastlücken des Signals. Nur dann, wenn im Satellitenempfänger-Steuermodul zusätzlich zu einem Bildsignal das Vorliegen dieses Kennsignals detektiert wird, wird ein Suchlaufstopsignal für den Satellitenempfänger erzeugt.

Vorzugsweise sind der Fernsehempfänger 11 und das diesem zugeordnete Satellitenempfänger-Steuermodul bezüglich ihrer Stromversorgung miteinander verkoppelt, so daß bei einer Betätigung des Netzschalters beide Geräte gemeinsam ein- und ausgeschaltet werden.

Beim oben beschriebenen Ausführungsbeispiel ist es möglich, die Signale einer bestimmten Sendeanstalt, beispielsweise ARD, sowohl über die terrestrische Antenne 8 als auch über die Außeneinheit 1, die eine Satellitenantenne aufweist, zu empfangen. Dem terrestrischen Empfang dieser Sendeanstalt kann dabei eine andere oder auch dieselbe Stationstastennummer zugeordnet sein wie dem Satellitenempfang. Ist dem terrestrischen Empfang dieselbe Stationstastennummer zugeordnet wie beim Satellitenempfang, dann kann der jeweils gewünschte Empfang entweder unter Verwendung einer automatischen Prioritätsbestimmung, nach der dem Satellitenempfang grundsätzlich der Vorzug gegeben wird, oder aber durch eine manuelle Prioritätenbestimmung sichergestellt werden.

Eine Empfangsanlage gemäß der Erfindung umfaßt vorzugsweise mehrere Satellitenempfänger, mehrere Fernsehgeräte und mehrere Satellitenempfänger-Steuermodule. Um eine eindeutige Zuordnung zwischen dem jeweiligen Satellitenempfänger und dem zugehörigen Satellitenempfänger-Steuermodul sicherzustellen, wird in die vom Satellitenempfänger-Steuermodul zum Satellitenempfänger übertragenen Signale ein Modul-Kennsignal eingefügt, beispielsweise eine digital codierte laufende Nummer.

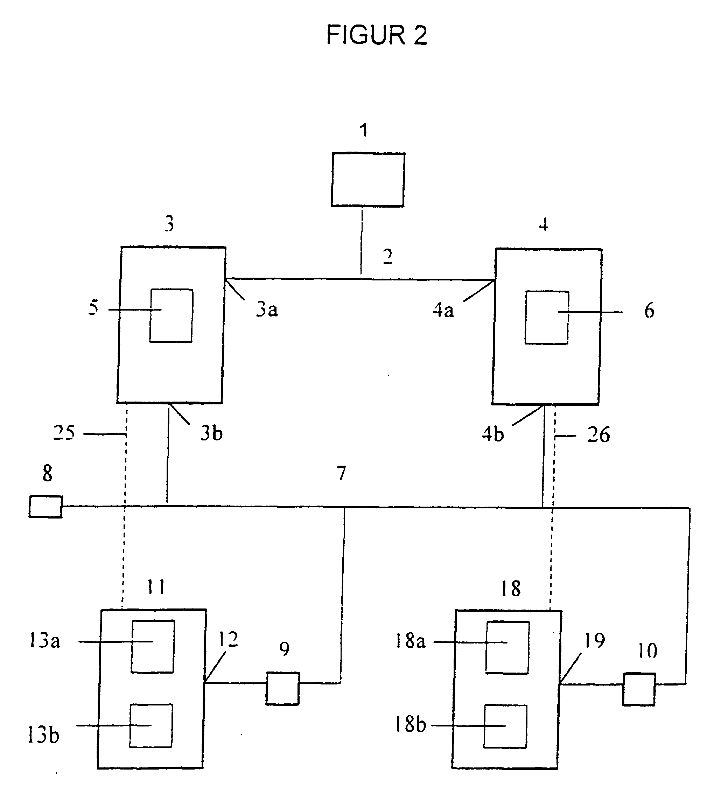

Die Figur 2 betrifft ein zweites Ausführungsbeispiel für die Erfindung und zeigt ein Blockschaltbild einer weiteren Satellitenfernsehsignal-Empfangsanlage.

Die in dieser Figur 2 gezeigte Satellitenfemsehsignal-Empfangsanlage stimmt mit der in der Figur 1 gezeigten weitgehend überein. Im folgenden wird lediglich auf die Unterschiede zwischen den beiden Empfangsanlagen eingegangen.

Bei der in der Figur 2 gezeigten Anlage ist das Satellitenempfänger-Steuermodul jeweils in den Fernsehempfänger 11, 18 integriert. Dabei wird in den genannten Fernsehgeräten die Funktion des Satellitenempfänger-Steuermoduls vom jeweiligen Mikrocomputer 13b, 18b wahrgenommen.

Da der genannte Mikrocomputer 13b, 18b jeweils nach einer Programmanwahl mittels der Bedientastatur Zugriff auf die dem angewählten Programm zugehörigen Frequenz-, Kanal- oder Teilungsverhältnisdaten hat, die im Senderspeicher 13a, 18a abgespeichert sind, können bei diesem Ausführungsbeispiel für die Erfindung die genannten Frequenz-, Kanal- oder Teilungsverhältnisdaten dem Satellitenempfänger 3, 4 zugeführt werden. Dies kann entweder über das Hausantennenkabel 7, über das im Haus vorhandene Wechselstromnetz oder auch über eine eigens zu diesem Zweck vorgesehene andere Signalverbindung 25, 26 erfolgen.

Der Satellitenempfänger 3, 4 kann mit dieser Information unter Verwendung seines eigenen Senderspeichers unmittelbar Rückschlüsse auf den jeweils zugeordneten Satellitenkanal ziehen und das gewünschte Satellitensignal verzögerungsfrei zur Verfügung stellen. Bei diesem Ausführungsbeispiel bedarf es nach einer Programmein- oder -umschaltung keines Suchlaufes im Satellitenempfänger und auch keiner Übertragung von Suchlaufstart- und Suchlaufstopsignalen über das Hausantennenkabel 7.

Die Anschlüsse 12 und 19 können auch Euro-AV-Buchsen sein, über die das jeweilige Satellitenempfänger-Steuermodul mit dem zugehörigen Satellitenempfänger kommuniziert.

## Patentansprüche

1. Satellitenfernsehsignal-Empfangsanlage, aufweisend
a) einen Satellitenempfänger (3), der einen mit einer Außeneinheit (1) der Empfangsanlage verbindbaren Eingangsanschluß (3a) zum Empfang von von der Außeneinheit abgeleiteten Fernsehsignalen, einen Modulator (5), der zur Umsetzung der Fernsehsignale in den VHF- oder UHF-Bereich vorgesehen ist, und einen Hausantennenanschluß (3b) aufweist, an welchem VHF- oder UHF-Signale abgreifbar sind,
b) einen vom Satellitenempfänger (3) ortsgetrennten Fernsehempfänger (11), welcher mindestens eine Videosignalausgangsbuchse (15) aufweist,
c) ein Hausantennenkabel (7), an welches der Satellitenempfänger (3) und der Fernsehempfänger (11) angeschlossen sind, die jeweils einen Hausantennenanschluß aufweisen und
d) ein an den Fernsehempfänger (11) angeschtossenes oder in den Fernsehempfänger integriertes Satellitenempfänger-Steuermodul (16) welches zur Erzeugung von Steuersignalen für den ortsgetrennten Satellitenempfänger (3) dient,
**dadurch gekennzeichnet, daß**
e) die im Satellitenempfänger-Steuermodul (16) erzeugten Steuersignale ein Suchlaufstartsignal für den Satellitenempfänger enthalten und
f) das Satellitenempfänger-Steuermodul (16) einen Detektor aufweist, der ein Einoder Umschalten des Fernsehempfängers detektiert und bei detektiertem Einoder Umschalten das Suchlaufstartsignal erzeugt.

2. Satellitenfernsehsignal-Empfangsanlage nach Anspruch 1,
**dadurch gekennzeichnet, daß**
die Videosignalausgangsbuchse eine Euro-AV-Buchse ist.

3. Satellitenfernsehsignal-Empfangsanlage nach Anspruch 1 oder 2,
**dadurch gekennzeichnet, daß**
die vom Satellitenempfänger-Steuermodul erzeugten Steuersignale fur den Satellitenempfänger über das Hausantennenkabel, das Wechselstromnetz oder eine zwischen dem Fernsehempfänger und dem Satellitenempfänger vorgesehene Signalverbindung zum Satellitenempfänger übertragen werden, und daß der Satellitenempfänger zum Empfang der vom Satellitenempfänger-Steuermodul erzeugten Steuersignale vorgesehen ist.

4. Satellitenfernsehsignal-Empfangsanlage nach einem der vorhergehenden Ansprüche,
**dadurch gekennzeichnet, daß**
das Satellitenempfänger-Steuermodul außerhalb des Fernsehempfängergehäuses angeordnet ist und daß dem Satellitenempfänger-Steuermodul über die Euro-AV-Buchse des Fernsehempfängers Bildsignale zugeführt werden, die den auf dem Bildschirm des Fernsehempfängers dargestellten Bildsignalen entsprechen.

5. Satellitenfernsehsignal-Empfangsanlage nach einem der vorhergehenden Ansprüche,
**dadurch gekennzeichnet, daß**
die im Satellitenempfänger-Steuermodul erzeugten Steuersignale ein Suchlaufstopsignal für den Satellitenempfänger enthalten.

6. Satellitenfernsehsignal-Empfangsanlage nach Anspruch 5,
**dadurch gekennzeichnet, daß**
das Satellitenempfänger-Steuermodul einen Detektor aufweist, der das Vorliegen eines Bildsignals detektiert und bei detektiertem Bildsignal das Suchlaufstopsignal erzeugt.

7. Satellitenfernsehsignal-Empfangsanlage nach einem der vorhergehenden Ansprüche 3 - 6,
**dadurch gekennzeichnet, daß**
die Steuersignale in Form eines 22 KHz-Schaltsignales übertragen werden.

8. Satellitenfernsehsignal-Empfangsanlage nach einem der vorhergehenden Ansprüche 1 - 7,
**dadurch gekennzeichnet, daß**
der Satellitenempfänger Mittel zur Einfügung eines Kennsignals in die Fernsehsignale aufweist.

9. Satellitenfernsehsignal-Empfangsanlage nach Anspruch 8, falls dieser vom Anspruch 5 abhängt,
**dadurch gekennzeichnet, daß**
das Satellitenempfänger-Steuermodul einen Detektor aufweist, der das Vorliegen des Kennsignals in den an der Euro-AV-Buchse vorliegenden Fernsehsignalen detektiert und nur bei detektiertem Kennsignal das Suchlaufstopsignal erzeugt.

10. Satellitenfernsehsignal-Empfangsanlage nach einem der Ansprüche 1 bis 3,
**dadurch gekennzeichnet, daß**
das Satellitenempfänger-Steuermodul innerhalb des Fernsehempfängergehäuses angeordnet ist.

11. Satellitenfernsehsignal-Empfangsanlage nach Anspruch 10,
**dadurch gekennzeichnet, daß**
das Satellitenempfänger-Steuermodul der Mikrocomputer des Fernsehempfängers ist.

12. Satellitenfernsehsignal-Empfangsanlage nach einem der vorhergehenden Ansprüche,
**dadurch gekennzeichnet, daß**
der Satellitenempfänger einen nichtflüchtigen Speicher aufweist, mittels dessen jedem empfangenen Satelliten-Fernsehprogramm ein im VHF- oder UHF-Bereich liegender terrestrischer Antennenkanal zugeordnet ist, und daß der Fernsehempfänger einen Senderspeicher aufweist, der zur Abspeicherung von Frequenzdaten, Kanaldaten oder Teilungsverhältnissen vorgesehen ist, die den terrestrischen Empfangskanälen entsprechen.

13. Satellitenfernsehsignal-Empfangsanlage nach einem der vorhergehenden Ansprüche,
**dadurch gekennzeichnet, daß**
sie mehrere Satellitenempfänger, mehrere Femsehempfänger und mehrere Satellitenempfänger-Steuermodule aufweist.

14. Satellitenfernsehsignal-Empfangsanlage nach Anspruch 13,
**dadurch gekennzeichnet, daß**
die von den Satellitenempfänger-Steuermodulen erzeugten Steuersignale mit einem Kennsignal für das das jeweilige Steuersignal erzeugende Satellitenempfänger-Steuermodul versehen sind.

15. Satellitenfernsehsignal-Empfangsanlage nach einem der vorhergehenden Ansprüche,
**dadurch gekennzeichnet, daß**
der Fernsehempfänger und der Satellitenempfänger eine gemeinsame Bedieneinheit aufweisen.

16. Satellitenfernsehsignal-Empfangsanlage nach Anspruch 15,
**dadurch gekennzeichnet, daß**
eine Kanalwahl für einen terrestrischen Fernsehsignalempfang und einen Satellitenfernsehsignalempfang mittels der Zifferntastatur der gemeinsamen Bedieneinheit erfolgt, ohne daß es eines Umschaltvorganges zwischen terrestrischem Empfang und Satellitenempfang bedarf.

## Claims

1. Satellite television-signal receiving system, comprising
a) a satellite receiver (3) that has an input terminal (3a) connectable to an external unit (1) of the receiving system for receiving television signals derived from the external unit, a modulator (5) that is provided for converting the television signals into the VHF or UHF range and a domestic antenna terminal (3b) at which VHF or UHF signals can be tapped,
b) a television receiver (11) that is spatially separated from the satellite receiver (3) and that has at least one video-signal output socket (15),
c) a domestic antenna cable (7) to which the satellite receiver (3) and the television receiver (11) are connected, each of which have a domestic antenna terminal, and
d) a satellite receiver control module (16) that is connected to the television receiver (11) or is incorporated in the television receiver and that serves to generate control signals for the spatially separate satellite receiver (3),
**characterized in that**
e) the control signals generated in the satellite receiver control module (16) contain a search start signal for the satellite receiver and
f) the satellite receiver control module (16) has a detector that detects switching-on or switching-over of the television receiver and generates the search start signal if switching-on or switching-over is detected.

2. Satellite television-signal receiving system according to Claim 1, **characterized in that** the video-signal output socket is a Euro AV socket.

3. Satellite television-signal receiving system according to Claim 1 or 2, **characterized in that** the control signals generated by the satellite receiver control module for the satellite receiver are transmitted to the satellite receiver via the domestic antenna cable, the alternating-current mains or a signal connection, provided between the television receiver and the satellite receiver, and **in that** the satellite receiver is provided for receiving the control signals generated by the satellite receiver control module.

4. Satellite television-signal receiving system according to one of the preceding claims, **characterized in that** the satellite receiver control module is disposed outside the television-receiver housing and **in that** there are fed to the satellite receiver control module via the Euro AV socket of the television receiver picture signals that correspond to the picture signals displayed on the picture screen of the television receiver.

5. Satellite television-signal receiving system according to one of the preceding claims, **characterized in that** the control signals generated in the satellite receiver control module contain a search stop signal for the satellite receiver.

6. Satellite television-signal receiving system according to Claim 5, **characterized in that** the satellite receiver control module has a detector that detects the presence of a picture signal and generates the search stop signal if a picture signal is detected.

7. Satellite television-signal receiving system according to one of the preceding Claims 3-6, **characterized in that** the control signals are transmitted in the form of a 22 kHz switching signal.

8. Satellite television-signal receiving system according to one of the preceding Claims 1-7, **characterized in that** the satellite receiver has means for inserting an identifier signal into the television signals.

9. Satellite television-signal receiving system according to Claim 8, if this depends on Claim 5, **characterized in that** the satellite receiver control module has a detector that detects the presence of the identifier signal in the television signals present at the Euro AV socket and generates the search stop signal only if an identifier signal is detected.

10. Satellite television-signal receiving system according to one of Claims 1 to 3, **characterized in that** the satellite receiver control module is disposed inside the television receiver housing.

11. Satellite television-signal receiving system according to Claim 10, **characterized in that** the satellite receiver control module is the microcomputer of the television receiver.

12. Satellite television-signal receiving system according to one of the preceding claims, **characterized in that** the satellite receiver has a nonvolatile memory by means of which a terrestrial antenna channel situated in the VHF or UHF range is assigned to every satellite television programme received, and **in that** the television receiver has a station memory that is provided for storing frequency data, channel data or division ratios that correspond to the terrestrial receiving channels.

13. Satellite television-signal receiving system according to one of the preceding claims, **characterized in that** it has a plurality of satellite receivers, a plurality of television receivers and a plurality of satellite receiver control modules.

14. Satellite television-signal receiving system according to Claim 13, **characterized in that** the control signals generated by the satellite receiver control modules are provided with an identifier signal for the satellite receiver control module generating the respective control signal.

15. Satellite television-signal receiving system according to one of the preceding claims, **characterized in that** the television receiver and the satellite receiver have a common operating unit.

16. Satellite television-signal receiving system according to Claim 15, **characterized in that** a channel selection for terrestrial television-signal reception and satellite television-signal reception takes place by means of a number keyboard of the common operating unit without a switchover operation between terrestrial reception and satellite reception being needed.

## Revendications

1. Installation de réception de signaux de télévision par satellite, comportant
a) un récepteur satellite (3) qui dispose d'un raccord d'entrée (3a) pouvant être relié à l'installation de réception par une unité externe (1) pour la réception de signaux de télévision provenant de l'unité externe, d'un modulateur (5) qui est prévu pour la conversion des signaux de télévision dans la gamme VHF ou UHF et d'un raccord d'antenne domestique (3b) d'où peuvent provenir les signaux VHF ou UHF,
b) un récepteur de télévision (11) séparé d'un récepteur satellite (3), lequel possède au moins une douille de sortie de signaux vidéo (15),
c) un câble d'antenne domestique (7) qui est raccordé sur le récepteur satellite (3) et sur le récepteur de télévision (11) qui présentent respectivement un raccord d'antenne domestique et
d) un module de commande de récepteur satellite (16) raccordé à un récepteur de télévision (11) ou intégré à un récepteur de télévision, lequel sert à générer des signaux de commande pour le récepteur satellite (3) distinct,
**caractérisée par le fait que**
e) les signaux de commande générés dans le module de commande du récepteur satellite (16) contiennent un signal de démarrage de recherche pour le récepteur satellite et
f) que le module de commande du récepteur satellite (16) présente un détecteur qui détecte une mise en service ou une commutation du récepteur de télévision et qui génère le signal de démarrage de la recherche lorsqu'une mise en service ou une commutation a été détectée.

2. Installation de réception de signaux de télévision par satellite selon la revendication 1,
**caractérisée par le fait que**
la douille de sortie du signal vidéo est une douille AV européenne.

3. Installation de réception de signaux de télévision par satellite selon la revendication 1 ou 2,
**caractérisée par le fait que**
les signaux de commande générés par le module de commande du récepteur satellite destinés au récepteur satellite sont retransmis au récepteur satellite par le câble d'antenne domestique, le réseau de courant alternatif ou une liaison de signaux prévue entre le récepteur de télévision et le récepteur satellite et que le récepteur satellite est prévu pour la réception des signaux de commande générés par le module de commande du récepteur satellite.

4. Installation de réception de signaux de télévision par satellite selon l'une des revendications précédentes,
**caractérisée par le fait que**
le module de commande du récepteur satellite est disposé en dehors du boîtier du récepteur de télévision et que des signaux d'image qui correspondent aux signaux d'image représentés sur l'écran du récepteur de télévision sont envoyés au module de commande du récepteur satellite par la douille AV européenne du récepteur de télévision.

5. Installation de réception de signaux de télévision par satellite selon l'une des revendications précédentes,
**caractérisée par le fait que**
les signaux de commande générés dans le module de commande du récepteur satellite contiennent un signal d'arrêt de recherche pour le récepteur satellite.

6. Installation de réception de signaux de télévision par satellite selon la revendication 5,
**caractérisée par le fait que**
le module de commande du récepteur satellite présente un détecteur qui détecte la présence d'un signal d'image et qui génère un signal d'arrêt de recherche lorsqu'un signal d'image a été détecté.

7. Installation de réception de signaux de télévision par satellite selon l'une des revendications 3 - 6 précédentes,
**caractérisée par le fait que**
les signaux de commande sont transmis sous la forme d'un signal de commutation de 22 KHz.

8. Installation de réception de signaux de télévision par satellite selon l'une des revendications 1 - 7 précédentes,
**caractérisée par le fait que**
le récepteur satellite présente un moyen d'insertion d'un signal d'identification dans les signaux télévisés.

9. Installation de réception de signaux de télévision par satellite selon la revendication 8, si celle-ci dépend de la revendication 5,
**caractérisée par le fait que**
le module de commande du récepteur satellite présente un détecteur qui détecte la présence du signal d'identification dans les signaux télévisés disponibles sur la douille AV européenne et qui génère uniquement le signal d'arrêt de recherche lorsqu'un signal d'identification a été détecté.

10. Installation de réception de signaux de télévision par satellite selon l'une des revendications 1 à 3,
**caractérisée par le fait que**
le module de commande du récepteur satellite se trouve à l'intérieur du boîtier du récepteur de télévision.

11. Installation de réception de signaux de télévision par satellite selon la revendication 10,
**caractérisée par le fait que**
le module de commande du récepteur satellite est le micro-ordinateur du récepteur de télévision.

12. Installation de réception de signaux de télévision par satellite selon l'une des revendications précédentes,
**caractérisée par le fait que** le récepteur satellite présente une mémoire non volatile au moyen de laquelle un canal d'antenne terrestre se trouvant dans la gamme VHF ou UHF est affecté à chaque programme de télévision par satellite reçu et que le récepteur de télévision présente une mémoire d'émetteur prévue pour l'enregistrement des données de fréquences, des données de canaux ou des rapports de division qui correspondent aux canaux de réception terrestre.

13. Installation de réception de signaux de télévision par satellite selon l'une des revendications précédentes,
**caractérisée par le fait que**
elle possède plusieurs récepteurs satellites, plusieurs récepteurs de télévision et plusieurs modules de commande de récepteurs satellites.

14. Installation de réception de signaux de télévision par satellite selon la revendication 13,
**caractérisée par le fait que**
les signaux de commande générés par les modules de commanc du récepteur satellite sont munis d'un signal d'identification pour le module de commande du récepteur satellite générant respectivement un signal de commande.

15. Installation de réception de signaux de télévision par satellite selon l'une des revendications précédentes,
**caractérisée par le fait que**
le récepteur de télévision et le récepteur satellite possèdent une unité de commande commune.

16. Installation de réception de. signaux de télévision par satellite selon la revendication 15,
**caractérisée par le fait que**
une sélection de canal pour une réception de signaux de télévision terrestre et une réception de signaux de télévision par satellite s'effectuent à l'aide du clavier numérique de l'unité de commande commune sans qu'une opération de commutation entre la réception terrestre et la réception satellite ne soit nécessaire.
